Europäisches Patentamt

European Patent Office

Office européen des brevets

(19)

(11) **EP 1 672 237 A2**

(12) **EUROPÄISCHE PATENTANMELDUNG**

| | |
|---|---|
| (43) Veröffentlichungstag:<br>**21.06.2006 Patentblatt 2006/25** | (51) Int Cl.:<br>***F16D 48/06*** *(2006.01)* |

(21) Anmeldenummer: **05026433.2**

(22) Anmeldetag: **03.12.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **18.12.2004 DE 102004060992**

(71) Anmelder: **LuK Lamellen und Kupplungsbau Beteiligungs KG**
**77815 Bühl (DE)**

(72) Erfinder:
- **Nazari, Behzad, Dr.**
  **72622 Nürtingen (DE)**
- **Gerhart, Jürgen**
  **77767 Appenweier (DE)**

(54) **Verfahren zum Begrenzen des Drucks in einem hydrostatischen Kupplungsausrücksystem**

(57) Ein Verfahren zum Begrenzen des Drucks in einem hydrostatischen Kupplungsausrücksystem mit einer automatisierten Kupplungsbetätigung enthält die Schritte:

- Ermitteln eines aktuellen Kupplungsmoments aus einer Kupplungsmomentenkennlinie;
- Bestimmen eines aktuellen Betriebsdrucks aus dem aktuellen Kupplungsmoment;
- Vergleichen des aktuellen Betriebsdrucks mit einem maximal zulässigen Betriebsdruck; und
- Begrenzen des Stellwegs zum Ein-/Ausrücken der Kupplung, wenn der aktuelle Betriebsdruck im hydrostatischen Ausrücksystem den maximalen Betriebsdruck übersteigt.

Fig. 1

**Beschreibung**

Die Erfindung betrifft ein Verfahren zum Begrenzen des in einem hydrostatischen Ausrücksystem herrschenden Drucks, insbesondere für automatisierte Kupplungsausrücksysteme.

Bei automatisierten Schaltgetrieben, beispielsweise Parallelschaltgetrieben, werden häufig elektromotorisch betätigte Kupplungsaktoren und hydrostatische Ausrücksysteme verwendet. Infolge der Ausrückkraft-Charakteristik der dabei verwendeten zugedrückten Kupplungen können im Betriebsfall, bedingt durch den elektromotorisch betätigten Kupplungsaktor, sehr hohe Ausrückkräfte und damit sehr hohe Ausrückdrücke im hydrostatischen Ausrücksystem erzielt werden. Da zugedrückte Kupplungen außerdem keinen mechanischen Anschlag aufweisen, kann es durch die hohen Drücke gegebenenfalls zu einer Beschädigung an der Kupplung und von Bauteilen des hydrostatischen Ausrücksystems kommen.

Um diese hohen Drücke und die damit einhergehende Gefahr einer Beschädigung zu vermeiden, wird im hydrostatischen Ausrücksystem z. B. ein Überdruckventil eingesetzt, das öffnet, wenn der Druck einen vorgegebenen Grenzwert übersteigt. Die Komponenten des Ausrücksystems sind dabei so dimensioniert, dass sie dem Druck bis zu dem Ventilöffnungsdruck des Überdruckventils standhalten.

Alternativ kann im hydrostatischen Ausrücksystem ein Drucksensor integriert werden, welcher einen überhöhten Druck an eine Steuerung meldet, die daraufhin beispielsweise den Stellmotor für den Kupplungsaktor abschaltet bzw. die Motorspannung reduziert, so dass ein Überdruck verhindert wird.

Davon ausgehend ist es Aufgabe der Erfindung, ein Begrenzen des Betriebsdrucks und damit der Ausrückkraft im hydrostatischen Kupplungsausrücksystem zu ermöglichen, ohne zusätzliche mechanische Bauteile vorsehen zu müssen.

Diese Aufgabe wird mit einem Verfahren mit den Merkmalen des Anspruchs 1 gelöst. Bevorzugte Ausgestaltungen sind in den abhängigen Ansprüchen angegeben.

Der Erfindung liegt der Gedanke zugrunde, auf mechanische, zusätzliche Komponenten zur Druckerfassung, wie z. B. Drucksensoren oder Überdruckventile zu verzichten und statt dessen anhand charakteristischer Parameter des Kupplungsausrücksystems, die beispielsweise softwaretechnisch implementiert sind, oder über indirekt den Druck abbildende Parameter, wie z. B. das Kupplungsmoment, zu erfassen, wenn der Betriebsdruck im hydrostatischen Ausrücksystem über einen Maximaldruck ansteigt, welcher zu einer Beschädigung von Bauteilen führen könnte. Da die Charakteristika aus für die Kupplungssteuerung erfassten Größen abgeleitet werden, insbesondere wird der Betriebsdruck aus dem aktuellen Kupplungsmoment ermittelt, kann auf zusätzliche Sensoren zur direkten Druckmessung oder Druckbegrenzung verzichtet werden.

Dazu enthält das Verfahren zum Begrenzen des Drucks in einem hydrostatischen Kupplungsausrücksystem mit einer automatisierten Kupplungsbetätigung die Schritte:

- Ermitteln eines aktuellen Kupplungsmoments aus einer Kupplungsmomentenkennlinie;

- Bestimmen eines aktuellen Betriebsdrucks aus dem aktuellen Kupplungsmoment;

- Vergleichen des aktuellen Betriebsdrucks mit einem maximal zulässigen Betriebsdruck; und

- Begrenzen des Stellwegs zum Ein-/Ausrücken der Kupplung, wenn der aktuelle Betriebsdruck im hydrostatischen Ausrücksystem den maximalen Betriebsdruck übersteigt.

Vorzugsweise bildet die Kupplungsmomentenkennlinie das Kupplungsmoment bzw. den Betriebsdruck in Abhängigkeit von einem Stellweg des Kupplungsaktors ab. Beispielsweise kann ein solcher Stellweg der vom Kolben eines Zentralausrückers zurückgelegte Weg sein.

Vorzugsweise wird als aktuelles Kupplungsmoment ein physikalisches Kupplungsmoment $M_{KU}$ unter Berücksichtigung einer Abweichung von einem nominellen Kupplungsmoment bestimmt, insbesondere als

$$M_{KU} = M_{MOT} + J\dot{\omega} + \Delta M,$$

wobei $M_{MOT}$ das Motormoment, J das Massenträgheitsmoment, $\dot{\omega}$ die Winkelbeschleunigung und $\Delta M$ die Abweichung der physikalischen Kennlinie von der nominellen Kennlinie in Schlupfphasen der Kupplung ist.

Bevorzugter Weise wird dabei zum Bestimmen des aktuellen Betriebsdrucks eine vom Kupplungsaktor auf die Kupplung ausgeübte Anpresskraft $F_{KU}$ bestimmt, die über den Übersetzungsfaktor $i_{TF}$ proportional zur Anpresskraft der Kupplung $F_A$ ist, wobei die Anpresskraft der Kupplung aus

$$M_{KU} = n \cdot r_m \cdot \mu \cdot F_A$$

bestimmt wird, wobei n die Anzahl der Beläge der Kupplung ist, $r_m$ der mittlere Reibradius der Kupplung ist und $\mu$ der Reibwert der Beläge ist.

Nach einer bevorzugten Ausführungsform ist der Reibwert der Beläge als variable Funktion über die Lebensdauer der Kupplung hinterlegt. Dadurch wird einer Variation des Reibwerts über die Lebensdauer der Kupplung, beispielsweise zwischen 0,2 und 0,4, Rechnung getragen. Die Funktion des Reibwerts in Abhängigkeit von der Lebensdauer der Kupplung kann aus empirischen Untersuchungen bestimmt werden.

Nach einer bevorzugten Ausführungsform wird der aktuelle Betriebsdruck p aus dem Kupplungsmoment $M_{KU}$ als

$$p = \frac{F_{KU} + F_{Reib-Za} - F_{Vorlast}}{A_{ZA}}$$

bestimmt, wobei $F_{KU}$ die Kraft zur Betätigung der Kupplung ist und sich aus dem Übersetzungsverhältnis der Tellerfeder der Kupplung und der erforderlichen Anpresskraft gemäß

$F_{KU} = i_{TF} \cdot F_A$ ergibt, $F_{Reib-ZA}$ die Reibung innerhalb des die Kupplung betätigenden Zentralausrückers ist, $F_{vorlast}$ eine Vorlastkraft im Zentralausrücker ist und $A_{ZA}$ die hydraulische Fläche des Zentralausrückers ist.

Da der Einfluss der Reibeffekte im Ein-/Ausrücksystem (Zentralausrücker) im Vergleich zu den anderen Einflussgrößen sehr klein ist, kann die Reibkraft $F_{Reib-ZA}$ vernachlässigt werden. Damit lässt sich die Berechnung des aktuellen Betriebsdrucks vereinfachen.

Vorzugsweise ist der Kupplungsaktor ein elektromotorisch betriebener Kupplungsaktor, so dass der vom Zentralausrücker realisierte maximal zulässige Ausrückweg und damit der Betriebsdruck p im hydrostatischen Ein-/Ausrücksystem durch Begrenzen der Motorspannung und/oder des Motorstroms des Kupplungsaktors limitiert werden kann.

Nachfolgend wird die Erfindung beispielhaft anhand der beigefügten Figuren beschrieben, in denen

Figur 1 eine schematische Darstellung einer Kupplung mit einem Zentralausrücker als Ausrücker zeigt, wobei auftretende Kräfte eingezeichnet sind;

Figur 2 eine typische Kupplungsmomentenkennlinie einer zugedrückten Kupplung zeigt; und

Figur 3 ein Flussdiagramm ist, welches den Ablauf des erfindungsgemäßen Verfahrens in einer Ausführungsform veranschaulicht.

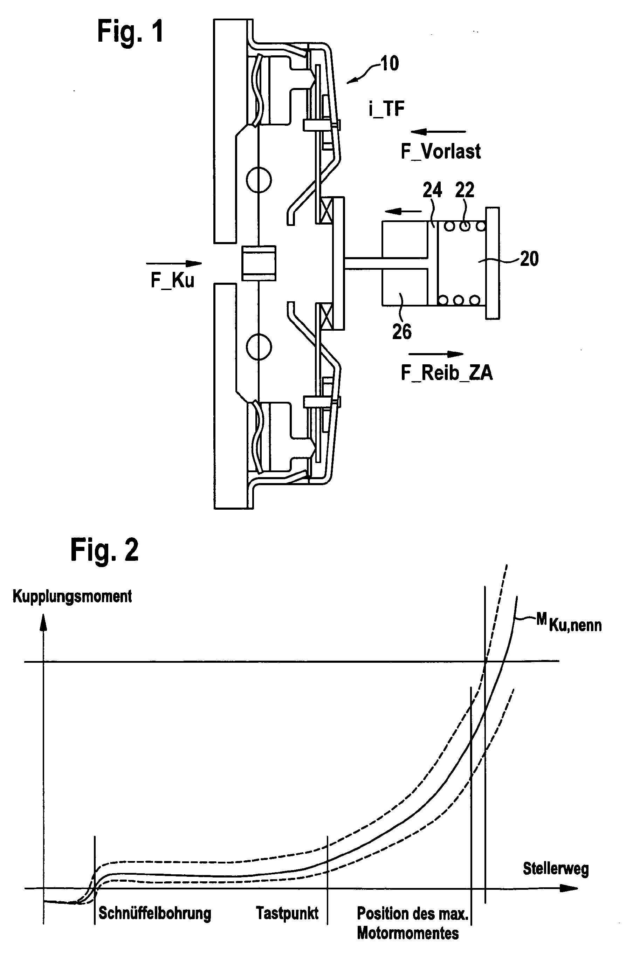

Die in Figur 1 dargestellte Kupplung 10 wird mittels eines Ausrückers, der als Zentralausrücker 20 ausgebildet ist betätigt und im Wesentlichen aus einem Zylinder 26, einem Hydraulikkolben 24 und einer Feder 22 besteht. Mit der Feder 22 wird eine Vorlastkraft $F_{Vorlast}$ auf das Stellelement, den Hydraulikkolben 24, aufgebracht. Im Zylinder 26, in dem der Kolben 24 und die Feder 22 aufgenommen sind, kann die Bewegung des Stellglieds (Hydraulikkolben 24) durch Reibkräfte gedämpft sein, welche als $F_{Reib-ZA}$ bezeichnet sind. Die vom Zentralausrücker 20 mittels des Kolbens 24 ausgeübte Anpresskraft $F_A$ wird unter Berücksichtigung des Übersetzungsverhältnisses $i_{TF}$ der Tellerfeder der Kupplung 10 als Kupplungskraft $F_{KU}$ aufgebracht.

In Figur 1 ist eine zugedrückte Kupplung dargestellt ist, deren Aufbau an sich bekannt ist und nicht weiter erläutert wird. In der dargestellten Ausführungsform wird ein Zentralausrücker 20 zur Betätigung der Kupplung verwendet, der von einem nicht dargestellten Kupplungsaktor elektromotorisch betätigt wird. Anstelle eines Zentralausrückers kann jedoch auch ein anderes Kupplungsausrücksystem eingesetzt werden, das auf hydrostatischer (hydraulischer) Basis arbeitet.

Der Druck für die erforderliche Ausrückkraft des Zentralausrückers 20 wird durch das im Folgenden beschriebene Verfahren derart begrenzt, dass ein maximaler, vorgegebener Druck im Ausrücksystem nicht überschritten wird. Die Bewegung des Zentralausrückers 20 wird dabei vorzugsweise durch den Kupplungsaktor-Elektromotor (nicht dargestellt) initiiert, so dass zur Begrenzung der Bewegung des Hydraulikkolbens 24 eine Drosselung des Motorstroms bzw. der Motorspannung eingesetzt werden kann.

Das in Figur 1 dargestellte Kupplungsausrücksystem kann für verschiedene Arten von automatisierten Kupplungen eingesetzt werden.

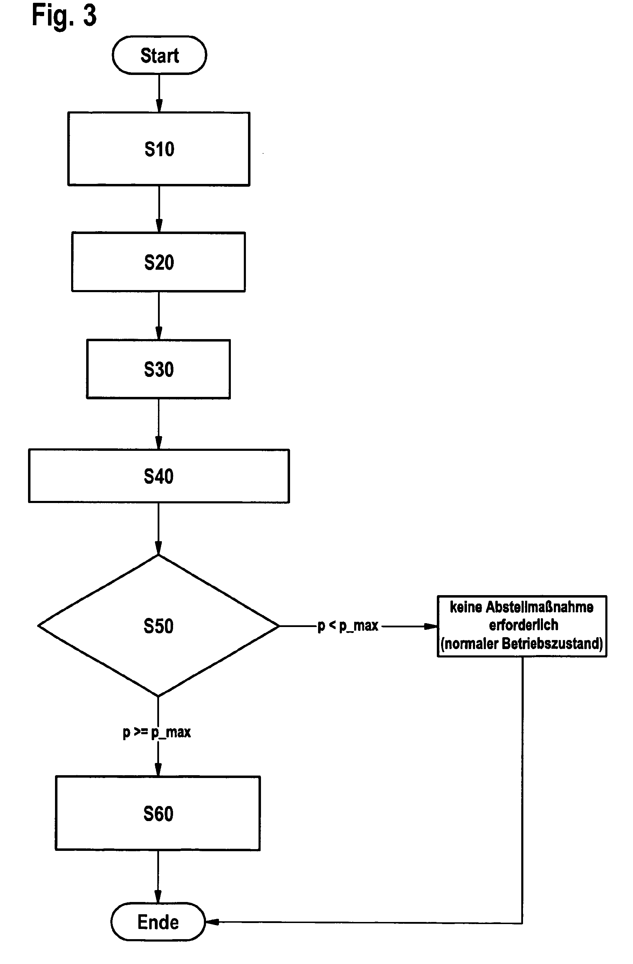

Das Verfahren zur Begrenzung des Drucks im hydrostatischen Kupplungsausrücksystem, das schematisch in Figur 3 dargestellt ist, ermittelt zunächst in Schritt S10 ein aktuelles Kupplungsmoment $M_{KU}$ aus einer Kupplungsmomentenkennlinie. Das aktuelle Kupplungsmoment $M_{KU}$ wird vorzugsweise als physikalisches Kupplungsmoment bestimmt, d. h. unter Berücksichtigung von Abweichungen von einem nominellen Kupplungsmoment $M_{KU, Nenn}$.

In Figur 2 ist mit durchgezogener Linie des Kupplungsnennmoment

$$M_{KU,Nenn} = M_{MOT} + J\dot{\omega}$$

eingezeichnet. Mit gestrichelten Linien ist eine Abweichung der physikalischen Kupplungsmomentenkennlinie $M_{KU}$ von der nominellen Kennlinie dargestellt. Die Abweichung ergibt sich z.B. bei unterschiedlichen Fahrsituationen und/oder Schwankungen des Reibwerts. Damit das Ausrücksystem 20 das maximale Motormoment in allen Fahrzuständen und unter allen Situationen sicher übertragen kann, muss das Ausrücksystem 20 mit entsprechender Sicherheit ausgelegt werden. Insbesondere darf die Begrenzung des Betriebsdrucks im Kupplungsausrücksystem 20 die Übertragungsfähigkeit des maximalen Motormoments nicht beeinträchtigen, so dass als Kupplungsmoment $M_{KU}$ die in Figur 2 dargestellte Abweichung von einem nominellen Kennmoment berücksichtigt und das Kupplungsmoment als

$$M_{KU} = M_{MOT} + J\dot{\omega} + \Delta M$$

bestimmt wird. J bezeichnet dabei das Massenträgheitsmoment und $\dot{\omega}$ die Winkelbeschleunigung.

In Figur 2 ist der Verlauf des Kupplungsmoments, d. h. sowohl des nominellen Kupplungsmoments $M_{KU,Nenn}$ als auch der physikalischen maximalen Schwankungsbreite $\Delta M$ um das nominelle Kupplungsmoment $M_{KU,Nenn}$, d. h. des physikalischen Kupplungsmoments in Abhängigkeit vom Stellweg des Hydraulikkolbens 24 im Zylinder 26 eingetragen. Nach dem Überfahren einer im Zylinder 26 zum Druckausgleich vorgesehenen Schnüffelbohrung steigt das Kupplungsmoment allmählich an und wird zunehmend steiler, bis die Position des maximalen Motormoments erreicht ist, welche dem voll ausgefahrenen Hydraulikkolben 24 entspricht. In dieser Position des maximalen Motormoments kann es jedoch zu dem erwähnten unerwünscht hohen Druck im Ausrücksystem 20 kommen, so dass während der Bewegung des Hydraulikkolbens 24 an verschiedenen Tastpunkten das erfindungsgemäße Verfahren zur Überwachung des Betriebsdrucks p in der hydrostatischen Strecke des Ausrücksystems durchgeführt wird.

Nachdem das Kupplungsmoment $M_{KU}$ in Schritt S10 (siehe Figur 3) anhand der Kupplungsmomentenkennlinie bestimmt wurde, wird aus dem aktuellen Kupplungsmoment $M_{KU}$ der Betriebsdruck p für den augenblicklichen Zustand bestimmt. Dazu wird in Schritt S20 gemäß Figur 3 die Anpresskraft der Kupplung berechnet, die beispielsweise aus

$$M_{KU} = n \cdot r_m \cdot \mu \cdot F_A$$

bestimmt werden kann, wobei n die Anzahl der Beläge der Kupplung ist, $r_m$ der mittlere Reibradius der Kupplung ist und $\mu$ den Reibwert der Beläge repräsentiert.

Der Reibwert $\mu$ der Beläge ist vorzugsweise als Funktion hinterlegt, die von der Lebensdauer der Kupplung 10 abhängig ist. Beispielsweise zeigt die Erfahrung, dass der Reibwert über die Lebensdauer der Kupplung 10 zwischen 0,2 und 0,4 variiert. Die mit der Lebensdauer einhergehende Erhöhung des Reibwerts kann empirisch im Voraus erfasst und als Funktion des Reibwerts hinterlegt werden, so dass für die jeweilige aktuelle Berechnung von p als Reibwert $\mu$ ein Wert eingesetzt wird, der den aktuellen Abnutzungszustand der Kupplungsbeläge berücksichtigt.

Anhand der Anpresskraft der Kupplung $F_A$ kann über ein bekanntes, der Kupplung 10 eigenes Übersetzungsverhältnis $i_{TF}$ die Aus-/Einrückkraft des Zentralausrückers 20 in Schritt S30 bestimmt werden als:

$$F_{KU} = i_{TF} \cdot F_A.$$

Damit lässt sich der aktuelle Betriebsdruck im hydrostatischen System für den jeweils aktuellen Betriebspunkt berechnen,

$$p = \frac{F_{KU} + F_{Reib-ZA} - F_{Vorlast}}{A_{ZA}},$$

wobei $F_{Reib-ZA}$ die Reibung im Zentalausrücker 20 ist, $F_{Vorlast}$ die Vorlastfederkraft des Zentalausrückers 20 und $A_{ZA}$ die hydraulische Fläche des Zentalausrückers 20 ist (Schritt S40).

Da die Reibung im Zentralausrücker 20 nur einen verhältnismäßig geringen Einfluss auf den augenblicklichen Druck hat, wird die Reibung $F_{Reib-ZA}$ vorzugsweise zur Vereinfachung der Berechnung vernachlässigt. Beispielsweise ergibt sich unter der Annahme einer maximalen Reibung von 200 N an der Kupplung 10 und einer hydraulischen Fläche des Zentralausrückers 20 (bzw. der Druckfläche des Hydraulikkolbens 24) von 630 mm$^2$ ein maximaler Druck aufgrund der Reibung von 3 bar. Da der maximal zulässige Druck in der Größenordnung von ca. 70 - 100 bar liegt, hat die Reibungskraft nur einen verhältnismäßig geringen Einfluss.

Nach der Bestimmung des aktuellen Betriebsdrucks p in Schritt S40 wird der berechnete Druck p mit einem im Voraus festgelegten Maximaldruck $p_{max}$ verglichen (Schritt S50), wobei $p_{max}$ derart festgelegt ist, dass alle Ausrücksystem-Komponenten diesem Druck $p_{max}$ problemlos standhalten. Liegt bei einem Vergleich des berechneten Drucks p mit dem beispielsweise in der Software hinterlegten Maximaldruck $p_{max}$ in Schritt S50 der aktuelle Druck p unter dem Maximaldruck, so liegt ein normaler Betriebszustand vor. Das Verfahren zum Begrenzen des Drucks endet damit ohne weitere Maßnahme. Liegt der aktuelle Druck p jedoch über dem zulässigen Maximaldruck $p_{max}$, wird der Stellweg des Kupplungsaktors und damit des Kolbens 24 begrenzt, indem beispielsweise die Motorspannung oder der Motorstrom begrenzt wird, so dass der zulässige Druck wieder unter den maximal erlaubbaren Druck $p_{max}$ abfällt und dort gehalten werden kann (Schritt S60).

Das Verfahren zum Begrenzen des Drucks kann kontinuierlich wiederholt werden, um frühzeitig die Gefahr einer Überschreitung eines Drucks, der zu Beschädigungen am hydrostatischen Ausrücksystem führen könnte, zu erfassen. Alternativ ist es auch möglich, das Verfahren dann zu starten und gegebenenfalls wiederholt auszuführen, wenn Betriebszustände vorliegen, in denen der Druck erfahrungsgemäß auf einen überhöhten Wert ansteigt.

**Bezugszeichenliste**

10 Kupplung
20 Ausrücker / Zentralausrücker
22 Feder
24 Hydraulikkolben
26 Zylinder

**Patentansprüche**

1. Verfahren zum Begrenzen des Drucks in einem hydrostatischen Kupplungsausrücksystem mit einer automatisierten Kupplungsbetätigung mittels eines Kupplungsaktors, enthaltend die Schritte:

   - Ermitteln eines aktuellen Kupplungsmoments aus einer Kupplungsmomentenkennlinie;
   - Bestimmen eines aktuellen Betriebsdrucks aus dem aktuellen Kupplungsmoment;
   - Vergleichen des aktuellen Betriebsdrucks mit einem maximal zulässigen Betriebsdruck; und
   - Begrenzen des Stellwegs zum Ein-/Ausrücken der Kupplung (10), wenn der aktuelle Betriebsdruck im hydrostatischen Ausrücksystem den maximalen Betriebsdruck übersteigt.

2. Verfahren nach Anspruch 1, **dadurch gekennzeichnet, dass** die Kupplungsmomentenkennlinie das Kupplungsmoment in Abhängigkeit von einem Stellweg abbildet.

3. Verfahren nach Anspruch 1 oder 2, **dadurch gekennzeichnet, dass** als aktuelles Kupplungsmoment ein physikalisches Kupplungsmoment $M_{KU}$ unter Berücksichtigung einer Abweichung von einem nominellen Kupplungsmoment als $M_{KU} = M_{Mot} + J\dot{\omega} + \Delta M$ bestimmt wird, wobei $M_{Mot}$ das Motormoment, $J$ das Massenträgheitsmoment, $\dot{\omega}$ die Winkelbeschleunigung und $\Delta M$ die Abweichung der physikalischen Kennlinie von der nominellen Kennlinie in Schlupfphasen der Kupplung (10) ist.

4. Verfahren nach Anspruch 3, **dadurch gekennzeichnet, dass** zum Bestimmen des aktuellen Betriebsdrucks eine vom Ausrücker (20) auf die Kupplung (10) ausgeübte Aus-/Einrückkraft $F_{KU} = i_{TF} \cdot F_A$ bestimmt wird, die über einen Faktor $i_{TF}$ proportional zur Anpresskraft der Kupplung $F_A$ ist, wobei die Anpresskraft der Kupplung (10) $M_{KU} = n \cdot r_m \cdot \mu \cdot F_A$ ist, mit

$n$: Anzahl der Beläge der Kupplung (10),
$r_m$: Mittlerer Reibradius der Kupplung (10), und
$\mu$: Reibwert der Kupplungsbeläge.

5. Verfahren nach Anspruch 4, **dadurch gekennzeichnet, dass** der Reibwert der Beläge als variable Funktion über die Lebensdauer der Kupplung (10) in der Software des Fahrzeuges hinterlegt ist.

6. Verfahren nach Anspruch 1, **dadurch gekennzeichnet, dass** der aktuelle Betriebsdruck p aus dem Kupplungsmoment $M_{KU}$ als

$$p = (F_{KU} + F_{Reib\text{-}ZA} - F_{vorlast}) / A_{ZA}$$

bestimmt wird, wobei $F_{KU}$ die vom Ausrücker (20) auzuübende Anpresskraft auf die Kupplung (10) ist, $F_{Reib\text{-}ZA}$ die Reibung im Zentralausrücker (20), $F_{vorlast}$ eine Vorlastkraft im Zentralausrücker (20) und $A_{ZA}$ die hydraulische Fläche des Zentralausrückers (20) ist.

7. Verfahren nach Anspruch 6, **dadurch gekennzeichnet, dass** die Reibung $F_{Reib\text{-}ZA}$ im Zentralausrücker (20) vernachlässigt wird: $F_{Reib\text{-}ZA} = 0$.

8. Verfahren nach Anspruch 1, **dadurch gekennzeichnet, dass** der Kupplungsaktor ein elektromotorisch betriebener Kupplungsaktor ist und der zum Ein-/Ausrücken der Kupplung benötigte Stellweg durch Begrenzen der Motorspannung und/oder des Motorstroms des Kupplungsaktors begrenzt wird.

## Fig. 1

i_TF

F_Vorlast

24  22

20

F_Ku

26

F_Reib_ZA

10

## Fig. 2

Kupplungsmoment

$M_{Ku,nenn}$

Stellerweg

Schnüffelbohrung     Tastpunkt     Position des max.
                                    Motormomentes

## Fig. 3

```
                    ┌──────────┐
                    │  Start   │
                    └────┬─────┘
                         │
                    ┌────▼─────┐
                    │   S10    │
                    └────┬─────┘
                         │
                    ┌────▼─────┐
                    │   S20    │
                    └────┬─────┘
                         │
                    ┌────▼─────┐
                    │   S30    │
                    └────┬─────┘
                         │
              ┌──────────▼──────────┐
              │        S40          │
              └──────────┬──────────┘
                         │
                         │
                      ◇  S50  ◇ ──── p < p_max ────►  ┌─────────────────────────┐
                         │                            │ keine Abstellmaßnahme   │
                         │                            │ erforderlich            │
                    p >= p_max                        │ (normaler Betriebszustand)│
                         │                            └────────────┬────────────┘
                    ┌────▼─────┐                                   │
                    │   S60    │                                   │
                    └────┬─────┘                                   │
                         │                                         │
                    ┌────▼─────┐                                   │
                    │  Ende    │ ◄─────────────────────────────────┘
                    └──────────┘
```